# EUROPEAN PATENT APPLICATION

(11) **EP 4 685 894 A1**
(43) Date of publication of application: **28.01.2026**
(21) Application number: 25150705.9
(22) Date of filing: 08.01.2025
(51) Int. Cl.: H01M 10/04, H01M 50/176, H01M 50/209, H01M 50/528, H01M 50/533, H01M 50/536, H01M 50/54, H01M 50/55, H01M 50/553, H01M 50/566

(54) **SECONDARY BATTERY AND BATTERY PACK INCLUDING THE SAME**

(30) Priority: 22.07.2024 KR 20240096381
(71) Applicant: SAMSUNG SDI CO., LTD., Yongin-si, Gyeonggi-do 17084 (KR)
(72) Inventor: PARK, Se Eun, 16678 Suwon-si (KR); BAE, Kwang Soo, 16678 Suwon-si (KR)
(74) Representative: Marks & Clerk LLP

(57) **Abstract**

The present disclosure relates to a secondary battery and a battery pack to prevent a local degradation phenomenon. To this end, a secondary battery may include a case, an electrode assembly disposed inside the case and having a first electrode and a second electrode, a first tab member connected to the first electrode and extending from the electrode assembly in a first direction, a cap assembly disposed to face the electrode assembly and having a first terminal and a second terminal, and a first connection member disposed between the electrode assembly and the cap assembly and connected to the first terminal and the first tab member, wherein the first connection member is formed asymmetrically with a first terminal axis passing through the first terminal in the first direction.

## Description

### FIELD

The present disclosure relates to a secondary battery and a battery pack including the same.

### BACKGROUND

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and which generates energy through oxidation/reduction reactions when lithium ions are intercalated/deintercalated at the positive and negative electrodes.

The above-described information disclosed in the technology that forms the background of the present disclosure is only intended to improve understanding of the background of the present disclosure, and thus may include information that does not constitute the related art.

### SUMMARY

The present disclosure is directed to providing a secondary battery and a battery pack including the same, in which internal resistance can be reduced to prevent a local degradation phenomenon.

The present disclosure is also directed to providing a secondary battery and a battery pack including the same, in which an installation space of electronic parts can be secured.

These and other aspects and features of the present disclosure will be described in or will be apparent from the following description of some embodiments of the present disclosure.

A secondary battery according to the present disclosure may include a case, an electrode assembly disposed inside the case and having a first electrode and a second electrode, a first tab member connected to the first electrode and extending from the electrode assembly in a first direction, a cap assembly disposed to face the electrode assembly and having a first terminal and a second terminal, and a first connection member disposed between the electrode assembly and the cap assembly and connected to the first terminal and the first tab member, wherein the first connection member is formed asymmetrically with a first terminal axis passing through the first terminal in the first direction.

The first connection member may include a first current collector connected to the first terminal, a first inner plate extending from the first current collector in a second direction intersecting the first direction, and a first outer plate extending from the first current collector in a direction opposite to the second direction, and a length of the first inner plate in the second direction may differ from a length of the first outer plate in the second direction.

The length of the first inner plate may be greater than the length of the first outer plate.

A ratio of the length of the first outer plate to the length of the first inner plate may be 0.25 or more and less than 1.

The length of the first inner plate may be 33 mm or more and 60 mm or less.

The length of the first outer plate may be 15 mm or more and 34 mm or less.

The first tab member may include a first inner tab member connected to the first inner plate, and a first outer tab member spaced apart from the first inner tab member in the direction opposite to the second direction and connected to the first outer plate.

A length of the first inner tab member in the second direction may be greater than a length of the first outer tab member in the second direction.

The secondary battery may further include a plurality of first inner welding lines extending from the first inner plate toward the first inner tab member and arranged in the second direction, and a plurality of first outer welding lines extending from the first outer plate toward the first outer tab member and arranged in the second direction.

The first inner tab member may include a plurality of first inner tabs stacked in a third direction intersecting the first direction and the second direction, and the first inner welding line may be disposed parallel to the third direction.

The number of first inner welding lines may be greater than the number of first outer welding lines.

The secondary battery may further include a second tab member connected to the second electrode and spaced apart from the first tab member, and a second connection member disposed between the electrode assembly and the cap assembly and connected to the second terminal and the second tab member.

The second tab member may extend from the electrode assembly in the first direction, and the second connection member may be formed asymmetrically with a second terminal axis passing through the second terminal in the first direction.

The second connection member may include a second current collector connected to the second terminal, a second inner plate extending from the second current collector in a direction opposite to the second direction intersecting the first direction, and a second outer plate extending from the second current collector in the second direction, and a length of the second inner plate in the second direction may differ from a length of the second outer plate in the second direction.

The length of the second inner plate may be greater than the length of the second outer plate.

The second tab member may include a second inner tab member connected to the second inner plate, and a second outer tab member spaced apart from the second inner tab member in the second direction and connected to the second outer plate.

The first terminal and the second terminal may be spaced apart from each other in the second direction intersecting the first direction.

A distance between the first terminal axis and a second terminal axis passing through the second terminal in the first direction may be 145 mm or more and 190 mm or less.

A battery pack according to the present disclosure may include a housing, and a plurality of secondary batteries disposed inside the housing, wherein the secondary battery includes a case, an electrode assembly disposed inside the case and having a first electrode and a second electrode, a first tab member connected to the first electrode and extending from the electrode assembly in a first direction, a cap assembly disposed to face the electrode assembly and having a first terminal and a second terminal, and a first connection member disposed between the electrode assembly and the cap assembly and connected to the first terminal and the first tab member, and the first connection member is formed asymmetrically with a first terminal axis passing through the first terminal in the first direction.

The battery pack may further include a second tab member connected to the second electrode and spaced apart from the first tab member, and a second connection member disposed between the electrode assembly and the cap assembly and connected to the second terminal and the second tab member, wherein the second connection member may be formed asymmetrically with a second terminal axis passing through the second terminal in the first direction.

At least some of the above and other features of the invention are set out in the claims.

### BRIEF DESCRIPTION OF THE DRAWINGS

The drawings accompanying this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view showing a configuration of a battery pack according to some embodiments of the present disclosure;
FIG. 2 is a schematic perspective view showing a configuration of a secondary battery according to some embodiments of the present disclosure;
FIG. 3 is a schematic exploded perspective view showing the configuration of the secondary battery according to some embodiments of the present disclosure;
FIG. 4 is a schematic cross-sectional view showing the configuration of the secondary battery according to some embodiments of the present disclosure;
FIG. 5 is a schematic view showing a configuration of an electrode assembly according to some embodiments of the present disclosure;
FIG. 6 is a schematic enlarged view showing a configuration of a cap assembly according to some embodiments of the present disclosure;
FIG. 7 is a schematic enlarged view showing a configuration of a first connection member according to some embodiments of the present disclosure;
FIG. 8 is a schematic view showing a configuration of a first inner welding line and a first outer welding line according to some embodiments of the present disclosure;
FIG. 9 is a schematic enlarged view showing a configuration of a second connection member according to some embodiments of the present disclosure;
FIG. 10 is a schematic view showing a configuration of a second inner welding line and a second outer welding line according to some embodiments of the present disclosure; and
FIG. 11 is a schematic view showing a configuration of a secondary battery according to other embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meanings and concepts consistent with the technical idea of the present disclosure based on the principle that the inventor(s) can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified. When "C or more and D or less" is stated, it means "C to D," unless otherwise specified.

The terms used in the present specification are for describing embodiments of the present disclosure and are not intended to limit the present disclosure.

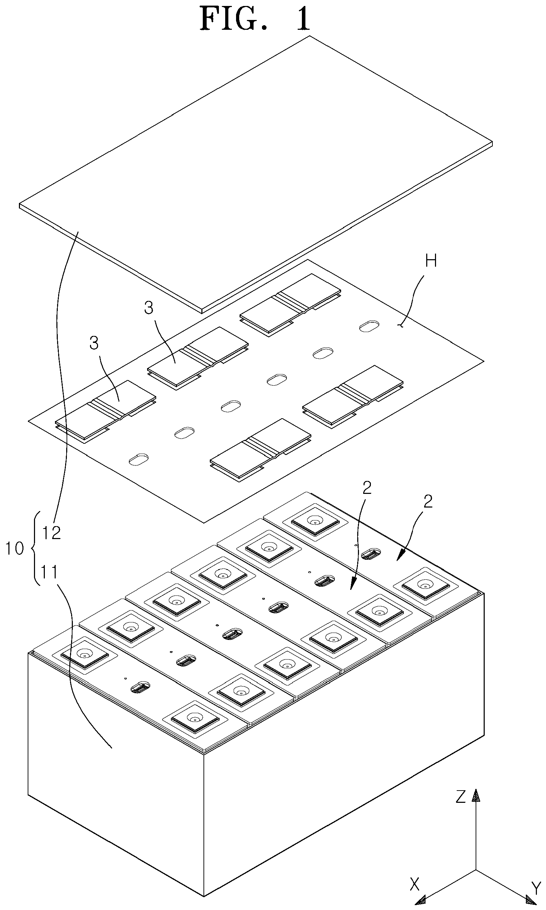

FIG. 1 is a schematic perspective view showing a configuration of a battery pack according to some embodiments of the present disclosure.

Referring to FIG. 1, the battery pack according to the present embodiments may include a housing 10, a secondary battery 2, and a busbar 3.

The housing 10 may form a rough exterior of the battery pack and provide a space in which the secondary battery 2 may be accommodated.

The housing 10 according to the present embodiments may include a housing body 11 and a cover 12.

The housing body 11 may be formed to have a box shape which is hollow and has one side opened. A cross-sectional shape of the housing body 11 is not limited to a quadrangular shape shown in FIG. 1, and may be changed in design to have any of various shapes such as a polygon, circle, and oval.

The cover 12 may be coupled to the housing body 11 and close an internal space of the housing body 11. For example, the cover 12 may be formed to have substantially a plate shape and may be disposed to face the open one side of the housing body 11. The cover 12 may be fixed to the housing body 11 by any of various types of coupling methods such as bolting, welding, and fitting methods.

The secondary battery 2 may function as a unit structure that stores and supplies power in the battery pack. The secondary battery 2 may be disposed inside the housing 10.

Hereinafter, the secondary battery 2 according to various embodiments of the present disclosure will be described.

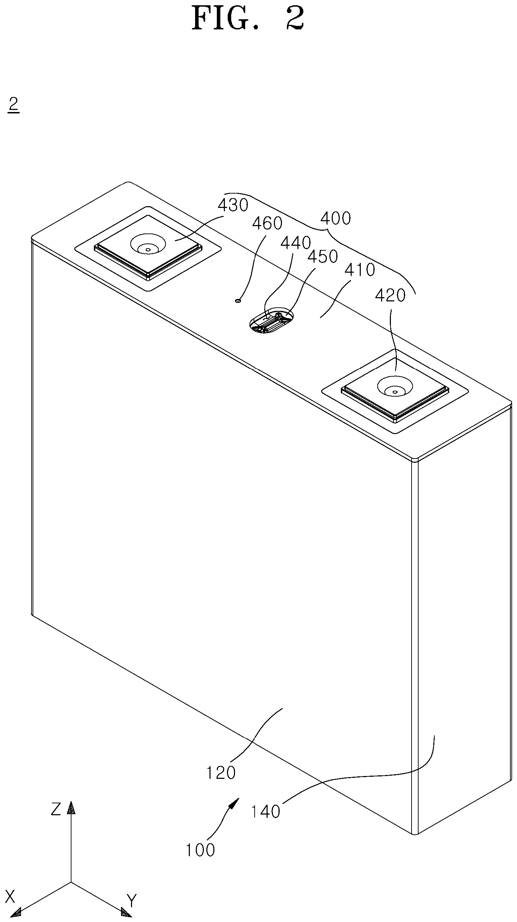

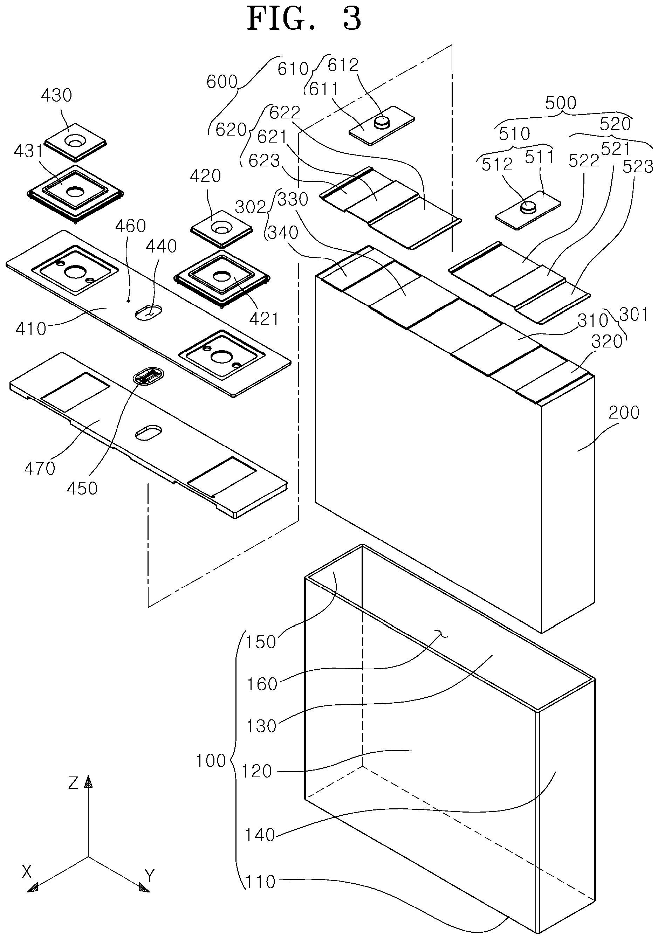

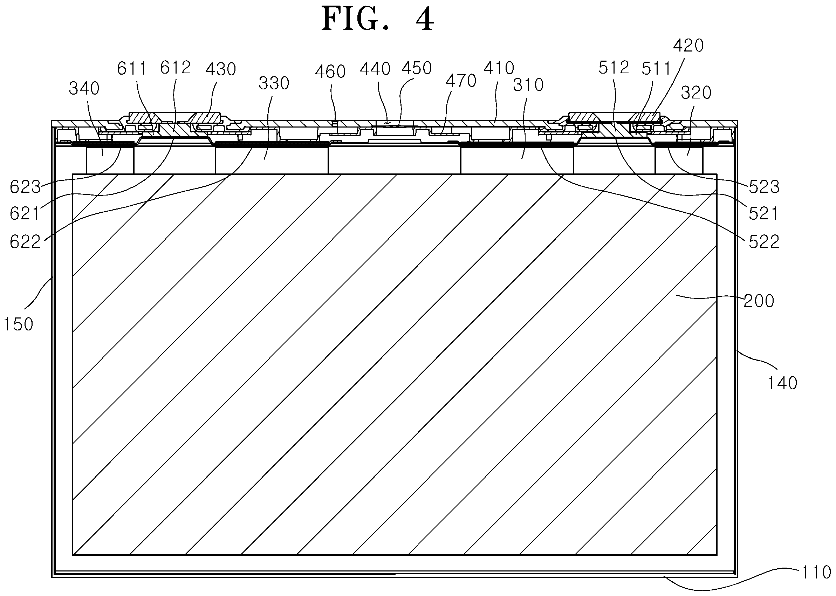

FIG. 2 is a schematic perspective view showing a configuration of a secondary battery according to some embodiments of the present disclosure. FIG. 3 is a schematic exploded perspective view showing the configuration of the secondary battery according to some embodiments of the present disclosure. FIG. 4 is a schematic cross-sectional view showing the configuration of the secondary battery according to some embodiments of the present disclosure.

Hereinafter, an example in which the secondary battery is a lithium ion secondary battery and is a prismatic battery will be described. However, the present disclosure is not limited thereto, and the secondary battery may be a lithium polymer battery or cylindrical battery.

Referring to FIGS. 2 to 4, the secondary battery 2 according to the present embodiments includes a case 100, an electrode assembly 200, a first tab member 301, a cap assembly 400, and a first connection member 500.

The case 100 may form a rough exterior of the secondary battery 2 and may accommodate the electrode assembly 200.

The case 100 according to the present embodiments may include a bottom portion 110, a front portion 120, a back portion 130, a first side portion 140, and a second side portion 150.

The bottom portion 110 may form an exterior of a lower side (such as shown in FIG. 3) of the case 100. The bottom portion 110 according to the present embodiments may have a rectangular plate shape. The bottom portion 110 may be seated on a bottom surface of the housing body 11.

The front portion 120, the back portion 130, the first side portion 140, and the second side portion 150 may form an exterior of a peripheral surface of the case 100.

The front portion 120, the back portion 130, the first side portion 140, and the second side portion 150 according to the present embodiments may have a plate shape that extends upward (such as shown in FIG. 3) from an edge of the bottom portion 110. The front portion 120, the back portion 130, the first side portion 140, and the second side portion 150 may be disposed to form a room on the bottom portion 110. The front portion 120, the back portion 130, the first side portion 140, and the second side portion 150 may be disposed to form a rectangular cross-sectional shape.

The front portion 120 and the back portion 130 may be disposed to face each other in a longitudinal direction of the housing 10. The front portion 120 and the back portion 130 may be disposed in parallel. Areas of the front portion 120 and the back portion 130 may be the same.

The first side portion 140 and the second side portion 150 may be disposed to face each other in a width direction of the housing 10. The first side portion 140 and the second side portion 150 may be disposed in parallel. Areas of the first side portion 140 and the second side portion 150 may be the same. The areas of the first side portion 140 and the second side portion 150 may be smaller than the areas of the front portion 120 and the back portion 130.

The case 100 may further include an opening 160. The opening 160 according to the present embodiments may be a space surrounded by upper end portions of the front portion 120, the back portion 130, the first side portion 140, and the second side portion 150. The opening 160 may interconnect an internal space and an external space of the case 100.

Therefore, the case 100 according to the present embodiments may have a rectangular parallelepiped shape with an upper side that is open.

A first direction, to be described further below, may be a direction that is parallel to a Z-axis from the bottom portion 110 toward the opening 160 in FIGS. 3 and 4. A second direction may be a direction that is parallel to a Y-axis from the first side portion 140 toward the second side portion 150 in FIGS. 3 and 4. The second direction may intersect the first direction. A third direction may be a direction that is parallel to an X-axis from the front portion 120 toward the back portion 130 in FIGS. 3 and 4. The third direction may intersect the first and second directions.

The electrode assembly 200 may function as a unit structure that performs charging and discharging operations of power in a secondary battery. The electrode assembly 200 may be accommodated inside the case 100.

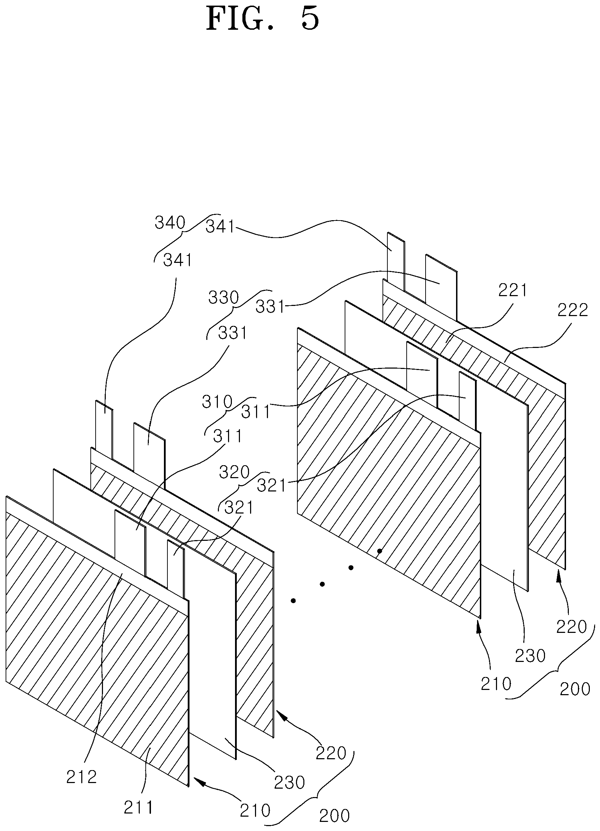

FIG. 5 is a schematic view showing a configuration of an electrode assembly according to some embodiments of the present disclosure.

Referring to FIGS. 2 to 5, the electrode assembly 200, according to the present embodiments, may include a first electrode 210, a second electrode 220, and a separator 230 disposed between the first electrode 210 and the second electrode 220. The first electrode 210, the separator 230, and the second electrode 220 may be provided in plural.

Hereinafter, an example in which the electrode assembly 200 has a stacked form in which the plurality of first electrodes 210, separators 230, and second electrodes 220 are sequentially stacked in the third direction will be described. However, the electrode assembly 200 is not limited thereto, and may be formed to have a form in which the first electrodes 210, the separators 230, and the second electrodes 220 are wound around a winding axis clockwise or counterclockwise in a stacked state.

The first electrode 210 may function as one of a positive electrode and a negative electrode of the electrode assembly 200. Hereinafter, an example in which the first electrode 210 is the positive electrode of the electrode assembly 200 will be described. However, the first electrode 210 is not limited thereto and may function as the negative electrode of the electrode assembly 200.

The first electrode 210, according to the present embodiments, may be formed to have a foil shape including a metallic material such as aluminum or an aluminum alloy. The type, size, shape, etc., of the first electrode 210 may not be particularly limited in some embodiments as long as the first electrode 210 is conductive without causing a chemical change in the secondary battery. A cross-sectional shape of the first electrode 210 may be changed in design to have any of various shapes other than the rectangular shape shown in FIG. 5.

A plurality of first electrodes 210 may be provided. The plurality of first electrodes 210 may be arranged in the third direction between the front portion 120 and the back portion 130 of the case 100. The number of first electrodes 210 may be variously changed in design depending on the charging capacity, etc., of the secondary battery 2.

A first active material layer 211 may be applied on at least a portion of the first electrode 210. The first active material layer 211 may be applied on both surfaces of the first electrode 210 or alternatively, applied on only one surface of the first electrode 210.

In the present embodiments, as the first electrode 210 may function as a positive electrode, the first active material layer 211 may include a positive electrode active material.

The positive electrode active material may be a compound capable of reversible intercalation and deintercalation of lithium ions (e.g., a lithiated intercalation compound). More specifically, as the positive electrode active material, one or more of composite oxides of lithium and a metal selected from the group consisting of cobalt, manganese, nickel, iron, and a combination thereof may be used.

As an example, the positive electrode active material may include at least one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM). Here, 0<x<1, 0<y<1, 0<z<1, and x+y+z=1 may be satisfied. The positive electrode active material may include only one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM) and include two or all of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM).

The first active material layer 211 may further include a positive electrode conductive material.

The positive electrode conductive material can be used to give conductivity to the first active material layer 211, and any material that is an electrically conductive material without causing a chemical change may be used. Examples of the positive electrode conductive material may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives, or a mixture thereof.

The first active material layer 211 may further include a positive electrode binder.

The positive electrode binder can serve to well bond particles constituting the positive electrode active material and also serves to well bond the positive electrode active material to the first electrode 210.

Examples of the positive electrode binder include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

When the aqueous binder is used as the positive electrode binder, the aqueous binder may further include a cellulose based compound capable of giving viscosity. As the cellulose based compound, one or more of carboxymethyl cellulose, hydroxypropylmethyl cellulose, methyl cellulose, and an alkali metal salt thereof may be used by being mixed. The alkali metal may be Na, K, or Li.

The dry binder may be a polymer material capable of fiberization, for example, polytetrafluoroethylene, polyvinylidene fluoride, polyvinylidene fluoride-hexafluoropropylene copolymer, polyethylene oxide, or a combination thereof.

The first electrode 210 may include a first uncoated portion 212 on which the first active material layer 211 is not applied. The first uncoated portion 212 according to the present embodiments may be disposed in an upper end portion region of the first electrode 210 disposed to face the opening 160 inside the case 100. However, the first uncoated portion 212 is not limited thereto and may be formed over the entire edge region of the first electrode 210.

The second electrode 220 may function as one of a positive electrode and negative electrode of the electrode assembly 200. Hereinafter, an example in which the second electrode 220 is the negative electrode of the electrode assembly 200 will be described. However, the second electrode 220 is not limited thereto and may function as the positive electrode of the electrode assembly 200.

A plurality of second electrodes 220 may be provided. The plurality of second electrodes 220 may be arranged in the third direction between the front portion 120 and the back portion 130 of the case 100. The first electrode 210 and the second electrode 220 may be alternately disposed in the third direction. The second electrode 220 may be spaced a predetermined distance from the first electrode 210 in the third direction.

The second electrode 220 according to the present embodiments may be formed to have a foil shape including a metallic material such as copper, a copper alloy, nickel, or a nickel alloy. The type, size, shape, etc., of the second electrode 220 may not be particularly limited as long as the second electrode 220 is conductive without causing a chemical change in the secondary battery. A cross-sectional shape of the second electrode 220 may be changed in design to have any of various shapes other than the rectangular shape shown in FIG. 5.

A second active material layer 221 may be applied on at least a portion of the second electrode 220. The second active material layer 221 may be applied on both surfaces of the second electrode 220 or alternatively, applied on only one surface of the second electrode 220.

As the second electrode 220 may function as a negative electrode, the second active material layer 221 may include a negative electrode active material.

The negative electrode active material may include a material capable of reversible intercalation/deintercalation of lithium ions, a lithium metal, a lithium metal alloy, a material with which lithium is doped or undoped, or a transition metal oxide.

The material capable of reversible intercalation/deintercalation of lithium ions may include a carbon-based negative electrode active material, for example, crystalline carbon, amorphous carbon, or a combination thereof. Examples of crystalline carbon may include graphite such as amorphous, plate-like, flake-like, spherical, or fiber-like natural graphite or artificial graphite, and examples of amorphous carbon may include soft carbon, hard carbon, mesophase pitch carbide, calcined coke, etc.

As the lithium metal alloy, an alloy of lithium and a metal selected from sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn) may be used.

As a material with which lithium is doped or undoped, a Si-based negative electrode active material or a Sn-based negative electrode active material may be used. The Si-based negative electrode active material may be silicon, a silicon-carbon composite, SiOₓ (0<x<2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to some embodiments, the silicon-carbon composite may be in the form of silicon particles and amorphous carbon coated on surfaces of the silicon particles. For example, the silicon-carbon composite may include a secondary particle (core) formed by primary silicon particles and an amorphous carbon coating layer (shell) located on a surface of the secondary particle. The amorphous carbon may be located between the primary silicon particles, for example, so that the primary silicon particles may be coated with amorphous carbon. The secondary particles may be present by being dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with a carbon-based negative electrode active material.

The second active material layer 221 may further include a negative electrode conductive material and a negative electrode binder.

The negative electrode conductive material may be used to give conductivity to the second active material layer 221, and any material that is an electrically conductive material without causing a chemical change may be used. Examples of the negative electrode conductive material may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives, or a mixture thereof.

The negative electrode binder serves to well bond particles constituting the negative electrode active material and also serves to well bond the positive electrode active material to the second electrode 220.

Examples of the negative electrode binder include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

When the aqueous binder is used as the negative electrode binder, the aqueous binder may further include a cellulose based compound capable of giving viscosity. As the cellulose based compound, one or more of carboxymethyl cellulose, hydroxypropylmethyl cellulose, methyl cellulose, and an alkali metal salt thereof may be used by being mixed. The alkali metal may be Na, K, or Li.

The dry binder may be a polymer material capable of fiberization, for example, polytetrafluoroethylene, polyvinylidene fluoride, polyvinylidene fluoride-hexafluoropropylene copolymer, polyethylene oxide, or a combination thereof.

The second electrode 220 may include a second uncoated portion 222 on which the second active material layer 221 is not applied. The second uncoated portion 222 according to the present embodiments may be disposed in an upper end portion region of the second electrode 220 disposed to face the opening 160 inside the case 100. However, the second uncoated portion 222 is not limited thereto and may be formed over the entire edge region of the second electrode 220.

The separator 230 may be disposed between the first electrode 210 and the second electrode 220. The separator 230 may function to prevent a short between the first electrode 210 and the second electrode 220 while allowing the movement of lithium ions between the first electrode 210 and the second electrode 220.

The separator 230 may be disposed to entirely cover a surface region of the electrode assembly 200. Therefore, the separator 230 may prevent the first electrode 210 and the second electrode 220 from being directly exposed to the outside of the electrode assembly 200.

As the separator 230, a multilayered membrane of two or more layers of polyethylene, polypropylene, polyvinylidene fluoride may be used, and a mixed multilayered membrane such as a two-layer separator of polyethylene/polypropylene, a three-layer separator of polyethylene/polypropylene/polyethylene, or a three-layer separator of polypropylene/polyethylene/polypropylene may be used.

The separator 230 may include a porous substrate and a coating layer including an organic material, an inorganic material, or a combination thereof, which is located on one surface or both surfaces of the porous substrate.

The porous substrate may be a polymer film made of one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymer, polyphenylene sulfide, polyethylene naphthalate, glass fiber, Teflon (Teflon^{™}), and polytetrafluoroethylene, or a copolymer or mixture of two or more of the above materials.

The organic material may include a polyvinylidene fluoride-based polymer or a (meth)acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic and inorganic materials may be present in one coating layer by being mixed or present in a form in which a coating layer including an organic material and a coating layer including an inorganic material are stacked.

The first tab member 301 may be connected to the first electrode 210 and may protrude outward from the electrode assembly 200. As the first electrode 210 is in the present embodiments as a positive electrode, the first tab member 301 may function as a positive electrode tab of the secondary battery 2. However, the first tab member 301 is not limited thereto, and when the first electrode 210 is a negative electrode, the first tab member may function as a negative electrode tab of the secondary battery 2.

The first tab member 301 according to the present embodiments may extend from the electrode assembly 200 in the first direction. That is, the first tab member 301 may extend toward the opening 160 inside the case 100.

The first tab member 301 according to the present embodiments may include a first inner tab member 310 and a first outer tab member 320.

The first inner tab member 310 and the first outer tab member 320 may be spaced apart from each other in the second direction. As an example, the first outer tab member 320 and the first inner tab member 310 may be disposed sequentially in the second direction. That is, the first outer tab member 320 may be disposed at a position that is spaced a predetermined distance from the first inner tab member 310 in a direction opposite to the second direction. The first outer tab member 320 may be disposed at a position that is relatively closer to the first side portion 140 than the first inner tab member 310 is.

The first inner tab member 310 may include a first inner tab 311.

The first inner tab 311 according to the present embodiments may have a foil shape extending from the first uncoated portion 212 of the first electrode 210 in the first direction. The first inner tab 311 may have a substantially rectangular shape. However, the shape of the first inner tab 311 is not limited thereto and may be changed in design to have any of various shapes.

The first inner tab 311 may be formed integrally with the first electrode 210. For example, the first inner tab 311 may be the remaining region of the first uncoated portion 212 that remains after a partial region of the first uncoated portion 212 is cut or removed by notching processing, etc. Alternatively, the first inner tab 311 may be manufactured separately from the first electrode 210 and then connected to the first uncoated portion 212 by welding, etc. A material of the first inner tab 311 may be the same as the material of the first electrode 210.

A plurality of first inner tabs 311 may be provided. The number of first inner tabs 311 may be the same as the number of first electrodes 210. Each first inner tab 311 may individually extend from the first uncoated portion 212 of one of different first electrodes 210. The neighboring first inner tabs 311 may be disposed to face each other in the third direction. The neighboring first inner tabs 311 may be disposed in parallel. Therefore, the first inner tab member 310 according to the present embodiments may be an assembly of the plurality of first inner tabs 311 stacked in the third direction. The neighboring first inner tabs 311 may be in contact with each other or spaced the thickness of the separator 230 from each other.

The first outer tab member 320 may include a first outer tab 321.

The first outer tab 321 according to the present embodiments may have a foil shape extending from the first uncoated portion 212 of the first electrode 210 in the first direction. The first outer tab 321 may be disposed at a position that is spaced a predetermined distance from the first inner tab 311 in a direction opposite to the second direction. The first outer tab 321 may have a substantially rectangular shape. However, the shape of the first outer tab 321 is not limited thereto and may be changed in design to have any of various shapes.

The first outer tab 321 may be formed integrally with the first electrode 210. For example, the first outer tab 321 may be a region excluding the first inner tab 311 of the remaining region of the first uncoated portion 212 that remains after a partial region of the first uncoated portion 212 is cut or removed by notching processing, etc. Alternatively, the first outer tab 321 may be manufactured separately from the first electrode 210 and then connected to the first uncoated portion 212 by welding, etc. A material of the first outer tab 321 may be the same as the material of the first electrode 210.

A plurality of first outer tabs 321 may be provided. The number of first outer tabs 321 may be the same as the number of first electrodes 210. Each first outer tab 321 may individually extend from the first uncoated portion 212 of one of different first electrodes 210. The neighboring first outer tabs 321 may be disposed to face each other in the third direction. The neighboring first outer tabs 321 may be disposed in parallel. Therefore, the first outer tab member 320 according to the present embodiments may be an assembly of the plurality of first outer tabs 321 stacked in the third direction. The neighboring first outer tabs 321 may be in contact with each other or spaced the thickness of the separator 230 from each other.

The secondary battery 2 according to the present embodiments may further include a second tab member 302.

The second tab member 302 may be connected to the second electrode 220 and may protrude outward from the electrode assembly 200. As the second electrode 220 is in the present embodiments a negative electrode, the second tab member 302 may function as a negative electrode tab of the secondary battery 2. However, the second tab member 302 is not limited thereto, and when the second electrode 220 is a positive electrode, the second tab member may function as a positive electrode tab of the secondary battery 2.

The second tab member 302 according to the present embodiments may extend from the electrode assembly 200 in the first direction. That is, the second tab member 302 may extend toward the opening 160 inside the case 100.

The first tab member 301 and the second tab member 302 may be disposed to be spaced apart from each other in the second direction. As an example, the second tab member 302 may be disposed at a position that is spaced a predetermined distance from the first tab member 301 in the second direction.

The second tab member 302 according to the present embodiments may include a second inner tab member 330 and a second outer tab member 340.

The second inner tab member 330 and the second outer tab member 340 may be spaced apart from each other in the second direction. As an example, the second inner tab member 330 and the second outer tab member 340 may be disposed sequentially in the second direction. That is, the second outer tab member 340 may be disposed at a position that is spaced a predetermined distance from the second inner tab member 330 in the second direction. The second outer tab member 340 may be disposed at a position that is relatively closer to the second side portion 150 than the second inner tab member 330 is.

The second inner tab member 330 may include a second inner tab 331.

The second inner tab 331 according to the present embodiments may have a foil shape extending from the second uncoated portion 222 of the second electrode 220 in the first direction. The second inner tab 331 may have a substantially rectangular shape. However, the shape of the second inner tab 331 is not limited thereto and may be changed in design to have any of various shapes.

The second inner tab 331 may be formed integrally with the second electrode 220. For example, the second inner tab 331 may be the remaining region of the second uncoated portion 222 that remains after a partial region of the second uncoated portion 222 is cut or removed by notching processing, etc. Alternatively, the second inner tab 331 may be manufactured separately from the second electrode 220 and then connected to the second uncoated portion 222 by welding, etc. A material of the second inner tab 331 may be the same as the material of the second electrode 220.

A plurality of second inner tabs 331 may be provided. The number of second inner tabs 331 may be the same as the number of second electrodes 220. Each second inner tab 331 may individually extend from the second uncoated portion 222 of one of different second electrodes 220. The neighboring second inner tabs 331 may be disposed to face each other in the third direction. The neighboring second inner tabs 331 may be disposed in parallel. Therefore, the second inner tab member 330 according to the present embodiments may be an assembly of the plurality of second inner tabs 331 stacked in the third direction. The neighboring second inner tabs 331 may be in contact with each other or spaced the thickness of the separator 230 from each other.

The second outer tab member 340 may include a second outer tab 341.

The second outer tab 341 according to the present embodiments may have a foil shape extending from the second uncoated portion 222 of the second electrode 220 in the first direction. The second outer tab 341 may be disposed at a position that is spaced a predetermined distance from the second inner tab 331 in the second direction. The second outer tab 341 may have a substantially rectangular shape. However, the shape of the second outer tab 341 is not limited thereto and may be changed in design to have any of various shapes.

The second outer tab 341 may be formed integrally with the second electrode 220. For example, the second outer tab 341 may be a region excluding the second inner tab 331 of the remaining region of the second uncoated portion 222 that remains after a partial region of the second uncoated portion 222 is cut or removed by notching processing, etc. Alternatively, the second outer tab 341 may be manufactured separately from the second electrode 220 and then connected to the second uncoated portion 222 by welding, etc. A material of the second outer tab 341 may be the same as the material of the second electrode 220.

A plurality of second outer tabs 341 may be provided. The number of second outer tabs 341 may be the same as the number of second electrodes 220. Each second outer tab 341 may individually extend from the second uncoated portion 222 of one of different second electrodes 220. The neighboring second outer tabs 341 may be disposed to face each other in the third direction. The neighboring second outer tabs 341 may be disposed in parallel. Therefore, the second outer tab member 340 according to the present embodiments may be an assembly of the plurality of second outer tabs 341 stacked in the third direction. The neighboring second outer tabs 341 may be in contact with each other or spaced the thickness of the separator 230 from each other.

The cap assembly 400 may be coupled to the case 100 to seal the case 100. The cap assembly 400 may be disposed to face the electrode assembly 200 in the first direction.

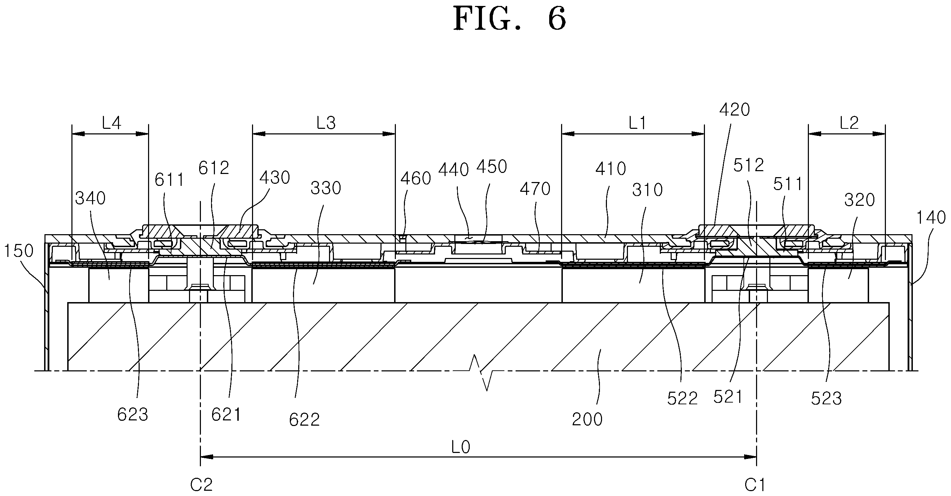

FIG. 6 is a schematic enlarged view showing a configuration of a cap assembly according to some embodiments of the present disclosure.

Referring to FIGS. 2 to 6, the cap assembly 400 according to the present embodiments may include a cap plate 410, a first terminal 420, and a second terminal 430.

The cap plate 410 may form a rough exterior of the cap assembly 400 and may support the entireties of the first terminal 420 and the second terminal 430.

The cap plate 410 according to the present embodiments may be formed to have a flat plate shape. The cap plate 410 may be disposed in the opening 160 of the case 100. The cap plate 410 may be disposed to face the electrode assembly 200 in the first direction. That is, the cap plate 410 may be disposed at a position that is spaced a predetermined distance from the electrode assembly 200 in the first direction. The cap plate 410 may be disposed parallel to the bottom portion 110 of the case 100.

The cap plate 410 may be seated on an upper end portion of the case 100, more specifically, upper end portions of the front portion 120, the back portion 130, the first side portion 140, and the second side portion 150. The cap plate 410 may be connected to the case 100 by any of various types of coupling methods such as welding, bolting, and fitting methods.

The first terminal 420 may protrude outward from the cap plate 410. The first terminal 420 may be electrically connected to the first electrode 210. As the first electrode 210 according to the present embodiments may function as a positive electrode, the first terminal 420 may be for example a positive electrode terminal of the secondary battery 2.

The first terminal 420 according to the present embodiments may be inserted into the cap plate 410. An upper end portion of the first terminal 420 may protrude from the cap plate 410 in the first direction. Although FIG. 3 shows an example in which the first terminal 420 has a rectangular cross-sectional shape, the cross-sectional shape of the first terminal 420 is not limited thereto and may be changed in design to have any of various shapes such as a circle, oval, and polygon. The first terminal 420 may be made of an electrically conductive material such as aluminum, nickel, or copper.

A first terminal axis C1 passing through a central portion of the first terminal 420 in the first direction may be disposed between the first inner tab member 310 and the first outer tab member 320.

A first gasket 421 may be installed between the cap plate 410 and the first terminal 420. The first gasket 421 may electrically insulate the cap plate 410 and the first terminal 420 and block moisture or foreign substances from being introduced between the cap plate 410 and the first terminal 420.

The first gasket 421 according to the present embodiments may be made of an insulating material such as polyethylene (PE), polypropylene (PP), polyethylene terephthalate (PET), or rubber. The first gasket 421 may be fixed between the cap plate 410 and the first terminal 420 by pressing, injection, adhesion, etc.

The second terminal 430 may protrude outward from the cap plate 410 at a location spaced apart from the first terminal 420. The second terminal 430 may be electrically connected to the second electrode 220. As the second electrode 220 according to the present embodiments may function as a negative electrode, the second terminal 430 may be for example a negative electrode terminal of the secondary battery 2.

The second terminal 430 according to the present embodiments may be inserted into the cap plate 410. An upper end portion of the second terminal 430 may protrude from the cap plate 410 in the first direction. Although FIG. 3 shows an example in which the second terminal 430 has a rectangular cross-sectional shape, the cross-sectional shape of the second terminal 430 is not limited thereto and may be changed in design to have any of various shapes such as a circle, oval, and polygon. The second terminal 430 may be made of an electrically conductive material such as aluminum, nickel, or copper.

The second terminal 430 may be disposed at a position that is spaced a predetermined distance from the first terminal 420 in the second direction. A second terminal axis C2 passing through a central portion of the second terminal 430 in the first direction may be disposed between the second inner tab member 330 and the second outer tab member 340.

A distance L0 between the first terminal axis C1 and the second terminal axis C2 may be 145 mm or more and 190 mm or less. In the present embodiments, the distance L0 between the first terminal axis C1 and the second terminal axis C2 may be 149.1 mm.

A second gasket 431 may be installed between the cap plate 410 and the second terminal 430. The second gasket 431 may electrically insulate the cap plate 410 and the second terminal 430 and block moisture or foreign substances from being introduced between the cap plate 410 and the second terminal 430.

The second gasket 431 according to the present embodiments may be made of an insulating material such as polyethylene (PE), polypropylene (PP), polyethylene terephthalate (PET), or rubber. The second gasket 431 may be fixed between the cap plate 410 and the second terminal 430 by pressing, injection, adhesion, etc.

The cap assembly 400 according to the present embodiments may further include a vent hole 440 and a vent 450.

The vent hole 440 according to the present embodiments may be formed to have a hole shape that vertically passes through both surfaces of the cap plate 410 in the first direction. The vent hole 440 may function as a configuration that provides a path through which flames, gas, smoke, etc., formed inside the case 100 are discharged to the outside of the case 100 when thermal runaway due to an overcurrent or the like occurs in the secondary battery 2. The vent hole 440 may be disposed between the first terminal 420 and the second terminal 430. A cross-sectional shape of the vent hole 440 may be changed in design to have any of various shapes such as an oval, circle, and polygon.

The vent 450 may be installed in the vent hole 440 and opened and closed in conjunction with a change in internal pressure of the case 100. That is, the vent 450 may close the vent hole 440 when the secondary battery 2 operates normally to block an electrolyte inside the case 100 from leaking to the outside of the case 100 or moisture, foreign substances, etc., from flowing into the case 100. The vent 450 may open the vent hole 440, when thermal runaway occurs in the secondary battery 2, to guide flames, gas, smoke, etc., formed inside the case 100 to be discharged to the outside of the case 100.

The vent 450 according to the present embodiments may be formed to have substantially a plate shape. The vent 450 may be fixed to the cap plate 410 by any of various types of coupling methods such as welding, bolting, and fitting methods. The vent 450 may be disposed inside the vent hole 440 or disposed to face the vent hole 440 in the first direction above or under the cap plate 410.

The thickness of the vent 450 in the first direction may be smaller than the thickness of the cap plate 410. Therefore, the vent 450 may be easily ruptured or broken when the internal pressure of the case 100 increases. The vent 450 may include a notch that is formed to be concave inward from the vent 450 to be preferentially ruptured when the internal pressure of the case 100 increases.

The cap assembly 400 according to the present embodiments may further include an electrolyte injection port 460 which is formed to pass through the cap plate 410 and at which a sealing plug may be installed. The electrolyte injection port 460 may be disposed to be spaced a predetermined distance from the vent hole 440 in the second direction or in a direction opposite to the second direction. The electrolyte injection port 460 may be disposed between the first terminal 420 and the second terminal 430.

The cap assembly 400 according to the present embodiments may further include an insulating plate 470.

The insulating plate 470 may be disposed between the cap plate 410 and the electrode assembly 200. The insulating plate 470 may prevent direct contact between the cap plate 410 and the electrode assembly 200 to insulate the cap plate 410 and the electrode assembly 200. The insulating plate 470 may fix the electrode assembly 200 inside the case 100. The insulating plate 470 can prevent damage to the electrode assembly 200 when the cap plate 410 is deformed to the inside of the case 100 due to an external impact, etc.

The insulating plate 470 according to the present embodiments may be disposed to face the electrode assembly 200 in the first direction inside the case 100. That is, the electrode assembly 200, the insulating plate 470, and the cap plate 410 may be disposed sequentially in the first direction. The insulating plate 470 may be fixed to an inner surface of the case 100 by any of various types of coupling methods such as fitting, welding, bolting, and adhesion methods. The insulating plate 470 may be in contact with one surface of the electrode assembly 200 from which the first tab member 301 and the second tab member 302 extend. The insulating plate 470 may be made of an insulating material such as polyethylene (PE), polypropylene (PP), polyethylene terephthalate (PET), or rubber.

The first connection member 500 may be disposed between the electrode assembly 200 and the cap assembly 400. The first connection member 500 may be connected to the first terminal 420 and the first tab member 301. The first connection member 500 may function as a component that electrically connects the first terminal 420 to the first tab member 301. The first connection member 500 may be made of an electrically conductive material. The first connection member 500 may be made of the same material as the first terminal 420.

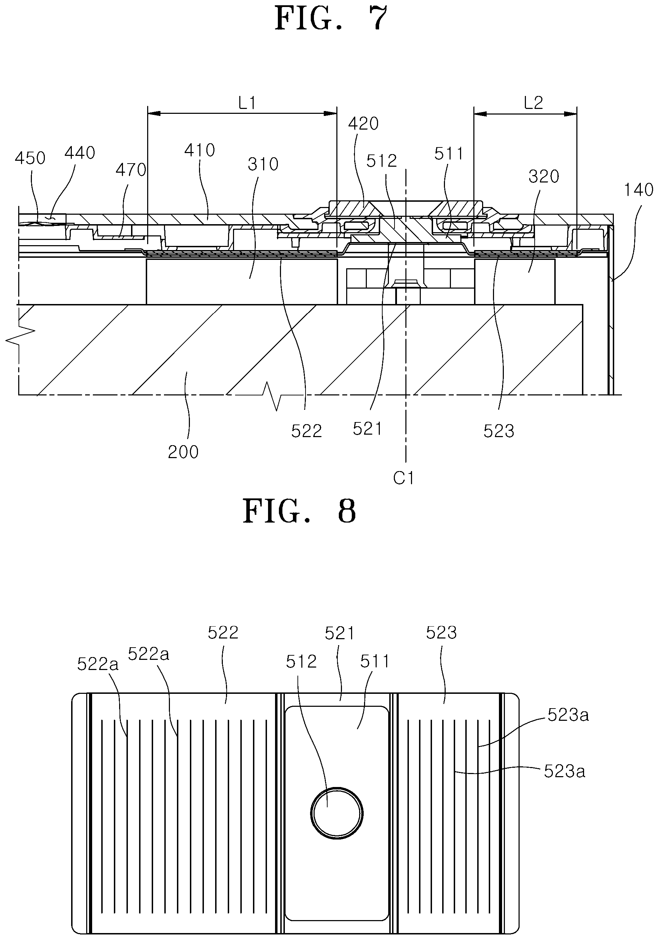

FIG. 7 is a schematic enlarged view showing a configuration of a first connection member according to some embodiments of the present disclosure.

Referring to FIGS. 2 to 7, the first connection member 500 according to the present embodiments may include a first current collector 510 and a first current collecting plate 520.

The first current collector 510 may be connected to the first terminal 420.

The first current collector 510 according to the present embodiments may include a first body 511 and a first boss 512.

The first body 511 may form one exterior side of the first current collector 510 and support the first boss 512.

The first body 511 according to the present embodiments may be disposed between the electrode assembly 200 and the first terminal 420. The first body 511 may be spaced a predetermined distance from a lower surface of the first terminal 420 in the first direction. The first terminal axis C1 may pass through a central portion of the first body 511. The first body 511 may be disposed inside the insulating plate 470 or alternatively, disposed above or under the insulating plate 470. In addition to the quadrangular shape shown in FIG. 3, the cross-sectional shape of the first body 511 may be changed in design to have any of various shapes such as a circle, oval, and polygon.

The first boss 512 may extend from the first body 511 and may be connected to the first terminal 420.

The first boss 512 according to the present embodiments may have a cylindrical shape extending from the first body 511 in the first direction. A center axis of the first boss 512 may be disposed to be located coaxially with the first terminal axis C1. An upper end surface of the first boss 512 may be in contact with the lower surface of the first terminal 420. In this case, the first boss 512 may vertically pass through the insulating plate 470 in the first direction. The upper end surface of the first boss 512 may be bonded to the lower surface of the first terminal 420 by laser welding. In addition to the circular shape shown in FIG. 3, the cross-sectional shape of the first boss 512 may be changed in design to have any of various shapes such as an oval and polygon.

The first current collecting plate 520 may be fixed to the first current collector 510 and connected to the first tab member 301.

The first current collecting plate 520 according to the present embodiments may include a first center plate 521, a first inner plate 522, and a first outer plate 523.

The first center plate 521 may form an exterior of a central portion of the first current collecting plate 520 and may be connected to the first current collector 510.

The first center plate 521 according to the present embodiments may be disposed between the first body 511 and the electrode assembly 200. The first center plate 521 may be in contact with the lower surface of the first body 511 positioned at a side opposite to the first boss 512. The first center plate 521 may be fixed to the lower surface of the first body 511 by any of various types of coupling methods such as welding, bolting, and adhesion methods.

The first center plate 521 may have both end portions extending from the first body 511 toward the electrode assembly 200. Both end portions of the first center plate 521 may pass through the insulating plate 470 and may be disposed at a lower side of the insulating plate 470.

The first inner plate 522 may extend from the first current collector 510 in the second direction.

The first inner plate 522 according to the present embodiments may extend from one end portion of the first center plate 521 in the second direction. The first inner plate 522 may be disposed to face the first inner tab member 310 in the first direction. The first inner plate 522 may be in contact with an end surface of the first inner tab member 310.

The first inner tab member 310 and the first inner plate 522 may be bonded by laser welding. As an example, a first inner welding line 522a may be formed on the first inner tab member 310 and the first inner plate 522. The first inner tab member 310 may be connected to the first inner plate 522.

FIG. 8 is a schematic view showing a configuration of a first inner welding line and a first outer welding line according to some embodiments of the present disclosure.

Referring to FIGS. 7 and 8, the first inner welding line 522a according to the present embodiments may extend from the first inner plate 522 toward the first inner tab member 310. The first inner welding line 522a may be formed as a mixture of the first inner plate 522 and the first inner tab 311 melted by heat generated during laser welding that is cured.

The first inner welding line 522a may linearly protrude from an outer surface of the first inner plate 522 disposed in the first direction. The first inner welding line 522a may be disposed parallel to the third direction. Therefore, the first inner welding line 522a allows the plurality of first inner tabs 311 stacked in the third direction to be simultaneously bonded to the first inner plate 522.

A plurality of first inner welding lines 522a may be provided. The plurality of first inner welding lines 522a may be arranged in the second direction on the first inner plate 522.

The first outer plate 523 may extend from the first current collector 510 in a direction opposite to the second direction (i.e., opposite to the direction that the first inner plate extends from the first current collector).

The first outer plate 523 according to the present embodiments may extend from the other end portion of the first center plate 521 in the direction opposite to the second direction. The first outer plate 523 may be disposed to face the first outer tab member 320 in the first direction. The first outer plate 523 may be in contact with an end surface of the first outer tab member 320.

The first outer tab member 320 and the first outer plate 523 may be bonded by laser welding. As an example, a first outer welding line 523a may be formed on the first outer tab member 320 and the first outer plate 523. The first outer tab member and the first outer plate may be connected.

The first outer welding line 523a according to the present embodiments may extend from the first outer plate 523 toward the first outer tab member 320. The first outer welding line 523a may be formed as a mixture of the first outer plate 523 and the first outer tab 321 melted by heat generated during laser welding that is cured.

The first outer welding line 523a may linearly protrude from an outer surface of the first outer plate 523 disposed in the first direction. The first outer welding line 523a may be disposed parallel to the third direction. Therefore, the first outer welding line 523a allows the plurality of first outer tabs 321 stacked in the third direction to be simultaneously bonded to the first outer plate 523.

A plurality of first outer welding lines 523a may be provided. The plurality of first outer welding lines 523a may be arranged in the second direction on the first outer plate 523.

Although an example in which the first inner plate 522 and the first outer plate 523 are indirectly connected to the first body 511 through the first center plate 521 has been described above, the first inner plate 522 and the first outer plate 523 are not limited to the above-described contents, but may be directly connected to the first body 511 without the first center plate 521.

The first connection member 500 may be formed asymmetrically with the first terminal axis C1. As an example, a length of one side of the first connection member 500 extending in the second direction with respect to the first terminal axis C1 may not be the same as a length of the other side of the first connection member 500 extending in the direction opposite to the second direction. More specifically, a length L1 of the first inner plate 522 in the second direction may differ from a length L2 of the first outer plate 523 in the second direction.

As an example, the length L1 of the first inner plate 522 may be greater than the length L2 of the first outer plate 523. In the secondary battery 2 according to the present embodiments, since the first tab member 301 and the second tab member 302 are formed coplanar with the electrode assembly 200, radiated heat may be concentrated on an upper region in which the first tab member 301 and the second tab member 302 are positioned. Therefore, the secondary battery 2 according to the present embodiments can prevent degradation by reducing the electrical resistance of the first connection member 500 and minimizing local concentration of radiated heat through a relative increase in the length L1 of the first inner plate 522.

The length L1 of the first inner plate 522 may be 33 mm or more and 60 mm or less, and the length L2 of the first outer plate 523 may be 15 mm or more and 34 mm or less. A ratio (L2/L1) of the length L2 of the first outer plate 523 to the length L1 of the first inner plate 522 may be 0.25 or more and less than 1.

In the present embodiments, the length L1 of the first inner plate 522 may be 50 mm, the length L2 of the first outer plate 523 may be 33.3 mm, and the ratio of the length L2 of the first outer plate 523 to the length L1 of the first inner plate 522 may be 0.666.

A length of the first inner tab member 310 in the second direction may be greater than a length of the first outer tab member 320 in the second direction. In the present embodiments, the length of the first inner tab member 310 may be the same as the length L1 of the first inner plate 522, and the length of the first outer tab member 320 may be the same as the length L2 of the first outer plate 523. However, the length of the first inner tab member 310 and the length of the first outer tab member 320 are not limited thereto and may be changed in design in various ways within a range in which the length of the first inner tab member 310 is greater than the length of the first outer tab member 320. Therefore, the secondary battery 2 according to the present embodiments can reduce the electrical resistance of the first tab member 301 through a relative increase in the length of the first inner tab member 310.

The number of first inner welding lines 522a may be greater than the number of first outer welding lines 523a. In the present embodiments, the number of first inner welding lines 522a may be 14, and the number of first outer welding lines 523a may be 8. However, the number of first inner welding lines 522a and the number of first outer welding lines 523a are not limited thereto and may be changed in design in various ways within a range where the number of first inner welding lines 522a is greater than the number of first outer welding lines 523a. Therefore, the secondary battery 2 according to the present embodiments can reduce the electrical resistance between the first tab member 301 and the first connection member 500 by relatively extending an electrically conductive path between the first inner tab member 310 and the first inner plate 522.

The secondary battery 2 according to the present embodiments may further include a second connection member 600.

The second connection member 600 may be disposed between the electrode assembly 200 and the cap assembly 400. The second connection member 600 may be connected to the second terminal 430 and the second tab member 302. The second connection member 600 may function as a component that electrically connects the second terminal 430 to the second tab member 302. The second connection member 600 may be made of an electrically conductive material. The second connection member 600 may be made of the same material as the second terminal 430.

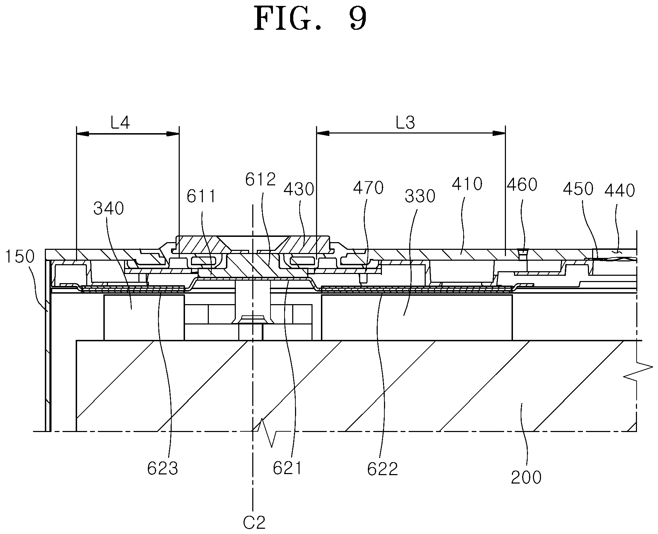

FIG. 9 is a schematic enlarged view showing a configuration of a second connection member according to some embodiments of the present disclosure.

Referring to FIGS. 2 to 6 and 9, the second connection member 600 according to the present embodiments may include a second current collector 610 and a second current collecting plate 620.

The second current collector 610 may be connected to the second terminal 430.

The second current collector 610 according to the present embodiments may include a second body 611 and a second boss 612.

The second body 611 may form one exterior side of the second current collector 610 and support the second boss 612.

The second body 611 according to the present embodiments may be disposed between the electrode assembly 200 and the second terminal 430. The second body 611 may be spaced a predetermined distance from a lower surface of the second terminal 430 in the first direction. The second terminal axis C2 may pass through a central portion of the second body 611. The second body 611 may be disposed inside the insulating plate 470 or alternatively, disposed above or under the insulating plate 470. In addition to the quadrangular shape shown in FIG. 3, the cross-sectional shape of the second body 611 may be changed in design to have any of various shapes such as a circle, oval, and polygon.

The second boss 612 may extend from the second body 611 and may be connected to the second terminal 430.

The second boss 612 according to the present embodiments may have a cylindrical shape extending from the second body 611 in the first direction. A center axis of the second boss 612 may be disposed to be located coaxially with the second terminal axis C2. An upper end surface of the second boss 612 may be in contact with the lower surface of the second terminal 430. In this case, the second boss 612 may vertically pass through the insulating plate 470 in the first direction. The upper end surface of the second boss 612 may be bonded to the lower surface of the second terminal 430 by laser welding. In addition to the circular shape shown in FIG. 3, the cross-sectional shape of the second boss 612 may be changed in design to have any of various shapes such as an oval and polygon.

The second current collecting plate 620 may be fixed to the second current collector 610 and connected to the second tab member 302.

The second current collecting plate 620 according to the present embodiments may include a second center plate 621, a second inner plate 622, and a second outer plate 623.

The second center plate 621 may form an exterior of a central portion of the second current collecting plate 620 and may be connected to the second current collector 610.

The second center plate 621 according to the present embodiments may be disposed between the second body 611 and the electrode assembly 200. The second center plate 621 may be in contact with the lower surface of the second body 611 positioned at a side opposite to the second boss 612. The second center plate 621 may be fixed to the lower surface of the second body 611 by any of various types of coupling methods such as welding, bolting, and adhesion methods.

The second center plate 621 may have both end portions extending from the second body 611 toward the electrode assembly 200. Both end portions of the second center plate 621 may pass through the insulating plate 470 and may be disposed at a lower side of the insulating plate 470.

The second inner plate 622 may extend from the second current collector 610 in a direction opposite to the second direction.

The second inner plate 622 according to the present embodiments may extend from one end portion of the second center plate 621 in the direction opposite to the second direction. The second inner plate 622 may be disposed to face the second inner tab member 330 in the first direction. The second inner plate 622 may be in contact with an end surface of the second inner tab member 330.

The second inner tab member 330 and the second inner plate 622 may be bonded by laser welding. As an example, a second inner welding line 622a may be formed on the second inner tab member 330 and the second inner plate 622. The second inner tab member 330 may be connected to the second inner plate 622.

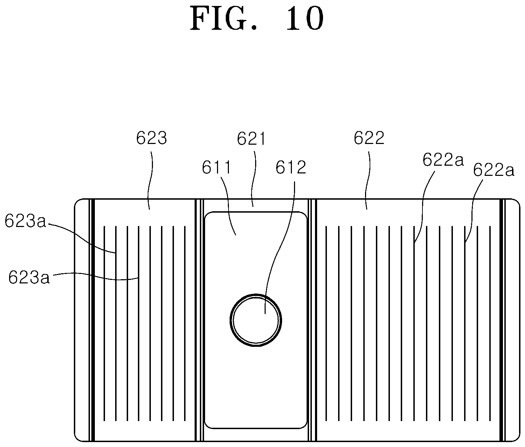

FIG. 10 is a schematic view showing a configuration of a second inner welding line and a second outer welding line according to some embodiments of the present disclosure.

The second inner welding line 622a according to the present embodiments may extend from the second inner plate 622 toward the second inner tab member 330. The second inner welding line 622a may be formed as a mixture of the second inner plate 622 and the second inner tab 331 melted by heat generated during laser welding that is cured.

The second inner welding line 622a may linearly protrude from an outer surface of the second inner plate 622 disposed in the first direction. The second inner welding line 622a may be disposed parallel to the third direction. Therefore, the second inner welding line 622a allows the plurality of second inner tabs 331 stacked in the third direction to be simultaneously bonded to the second inner plate 622.

A plurality of second inner welding lines 622a may be provided. The plurality of second inner welding lines 622a may be arranged in the second direction on the second inner plate 622.

The second outer plate 623 may extend from the second current collector 610 in the second direction.

The second outer plate 623 according to the present embodiments may extend from the other end portion of the second center plate 621 in the second direction. The second outer plate 623 may be disposed to face the second outer tab member 340 in the first direction. The second outer plate 623 may be in contact with an end surface of the second outer tab member 340.

The second outer tab member 340 and the second outer plate 623 may be bonded by laser welding. As an example, a second outer welding line 623a may be formed on the second outer tab member 340 and the second outer plate 623. The second outer tab member may be connected to the second outer plate.

The second outer welding line 623a according to the present embodiments may extend from the second outer plate 623 toward the second outer tab member 340. The second outer welding line 623a may be formed as a mixture of the second outer plate 623 and the second outer tab 341 melted by heat generated during laser welding that is cured.

The second outer welding line 623a may linearly protrude from an outer surface of the second outer plate 623 disposed in the first direction. The second outer welding line 623a may be disposed parallel to the third direction. Therefore, the second outer welding line 623a allows the plurality of second outer tabs 341 stacked in the third direction to be simultaneously bonded to the second outer plate 623.

A plurality of second outer welding lines 623a may be provided. The plurality of second outer welding lines 623a may be arranged in the second direction on the second outer plate 623.

Although an example in which the second inner plate 622 and the second outer plate 623 are indirectly connected to the second body 611 through the second center plate 621 has been described above, the second inner plate 622 and the second outer plate 623 are not limited to the above-described contents, but may be directly connected to the second body 611 without the second center plate 621.

The second connection member 600 may be formed asymmetrically with the second terminal axis C2. As an example, a length of one side of the second connection member 600 extending in the second direction with respect to the second terminal axis C2 may not be the same as a length of the other side of the second connection member 600 extending in the direction opposite to the second direction. More specifically, a length L3 of the second inner plate 622 in the second direction may differ from a length L4 of the second outer plate 623 in the second direction.

As an example, the length L3 of the second inner plate 622 may be greater than the length L4 of the second outer plate 623. In the secondary battery 2 according to the present embodiments, since the first tab member 301 and the second tab member 302 are formed coplanar with the electrode assembly 200, radiated heat may be concentrated on an upper region in which the first tab member 301 and the second tab member 302 are positioned. Therefore, the secondary battery 2 according to the present embodiments can prevent degradation by reducing the electrical resistance of the second connection member 600 and minimizing local concentration of radiated heat through a relative increase in the length L3 of the second inner plate 622.

The length L3 of the second inner plate 622 may be 33 mm or more and 60 mm or less, and the length L4 of the second outer plate 623 may be 15 mm or more and 34 mm or less. A ratio (L4/L3) of the length L4 of the second outer plate 623 to the length L3 of the second inner plate 622 may be 0.25 or more and less than 1.

In the present embodiments, the length L3 of the second inner plate 622 may be 50 mm, the length L4 of the second outer plate 623 may be 33.3 mm, and the ratio of the length L4 of the second outer plate 623 to the length L3 of the second inner plate 622 may be 0.666.

A length of the second inner tab member 330 in the second direction may be greater than a length of the second outer tab member 340 in the second direction. In the present embodiments, the length of the second inner tab member 330 may be the same as the length L3 of the second inner plate 622, and the length of the second outer tab member 340 may be the same as the length L4 of the second outer plate 623. However, the length of the second inner tab member 330 and the length of the second outer tab member 340 are not limited thereto and may be changed in design in various ways within a range in which the length of the second inner tab member 330 is greater than the length of the second outer tab member 340. Therefore, the secondary battery 2 according to the present embodiments can reduce the electrical resistance of the second tab member 302 through a relative increase in the length of the second inner tab member 330.

The number of second inner welding lines 622a may be greater than the number of second outer welding lines 623a. In the present embodiments, the number of second inner welding lines 622a may be 14, and the number of second outer welding lines 623a may be 8. However, the number of second inner welding lines 622a and the number of second outer welding lines 623a are not limited thereto and may be changed in design in various ways within a range where the number of second inner welding lines 622a is greater than the number of second outer welding lines 623a. Therefore, the secondary battery 2 according to the present embodiments can reduce the electrical resistance between the second tab member 302 and the second connection member 600 by relatively extending an electrically conductive path between the second inner tab member 330 and the second inner plate 622.

Although an example in which the secondary battery 2 according to the present embodiments includes the second tab member 302 and the second connection member 600 has been described above, the present disclosure is not limited thereto, and the second electrode 220 and the second terminal 430 may be directly connected without the second tab member 302 and the second connection member 600.

Hereinafter, a secondary battery according to other embodiments of the present disclosure will be described.

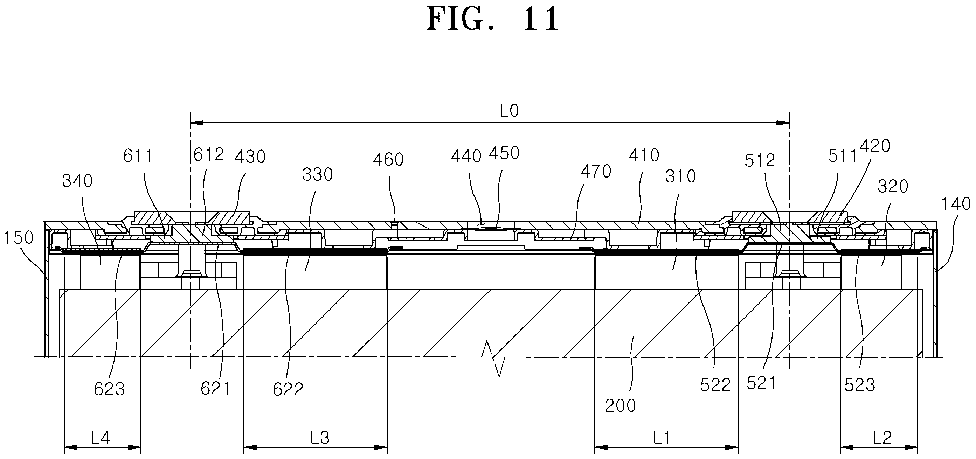

FIG. 11 is a schematic view showing a configuration of a secondary battery according to other embodiments of the present disclosure.

Referring to FIG. 11, the secondary battery 2 according to the present embodiments may be configured to differ from the secondary battery 2 described with reference to FIGS. 1 to 10 only in the distance L0 between the first terminal axis C1 and the second terminal axis C2, the length L1 of the first inner plate 522, the length L2 of the first outer plate 523, the length L3 of the second inner plate 622, and the length L4 of the second outer plate 623.

The distance L0 between the first terminal axis C1 and the second terminal axis C2 according to the present embodiments may be 185.7 mm. Therefore, the secondary battery 2 according to the present embodiments can secure a space in which various circuit boards, sensors, and electronic devices are mounted on the cap plate 410 by relatively increasing the distance between the first terminal 420 and the second terminal 430 compared to the secondary battery 2 according to some embodiments of the present disclosure.

In the present embodiments, as the distance L0 between the first terminal axis C1 and the second terminal axis C2 relatively increases, the length L2 of the first outer plate 523 and the length L4 of the second outer plate 623 may be relatively decreased.

As an example, the length L2 of the first outer plate 523 and the length L4 of the second outer plate 623 according to the present embodiments may be 15 mm.

The length L1 of the first inner plate 522 may be greater than the length L2 of the first outer plate 523 and changed in design in various ways within a range of 4 times or less the length L2 of the first outer plate 523. In the present embodiments, the length L1 of the first inner plate 522 may be 33.3 mm.

The length L3 of the second inner plate 622 may be greater than the length L4 of the second outer plate 623 and changed in design in various ways within a range of 4 times or less the length L4 of the second outer plate 623. In the present embodiments, the length L3 of the second inner plate 622 may be 33.3 mm.

A plurality of secondary batteries 2 may be provided in the battery pack according to the present embodiments. The plurality of secondary batteries 2 may be arranged in two or more columns in at least one of a longitudinal direction (X-axis direction in FIG. 1) and a width direction (Y-axis direction in FIG. 1) of the housing 10. Although FIG. 1 shows an example in which the plurality of secondary batteries 2 are arranged in six columns in the longitudinal direction of the housing 10, the arrangement form of the plurality of secondary batteries 2 is not limited thereto and may be changed in design to have various forms. The plurality of secondary batteries 2 may be arranged in parallel. The number of secondary batteries 2 may be variously changed in design depending on the size, shape, etc., of the housing 10.

The first terminal 420 of one of the pair of neighboring secondary batteries 2 and the second terminal 430 of the other secondary battery 2 may be disposed to face each other in the longitudinal direction of the housing 10. That is, a front portion 120 of one of the neighboring secondary batteries 2 may be disposed to face a back portion 130 of the other secondary battery 2.

The plurality of secondary batteries 2 may be electrically connected by the busbar 3.

The busbar 3 according to the present embodiments may be disposed between the cover 12 and the secondary battery 2. A plurality of busbars 3 may be provided. Each busbar 3 may connect a pair of neighboring secondary batteries 2 in series or in parallel.

As an example, the busbar 3 may have both sides connected to the first terminal 420 of one of the pair of neighboring secondary batteries 2 and the second terminal 430 of the other, respectively. Therefore, the plurality of secondary batteries 2 may be connected in series by the busbar 3.

However, the busbar 3 is not limited to this connection form and may have both sides connected to the first terminal 420 of one of the pair of neighboring secondary batteries 2 and the second terminal 430 of the other, respectively, or connected to the second terminal 430 of one of the pair of neighboring secondary batteries 2 and the second terminal 430 of the other, respectively.

The busbar 3 may be made of an electrically conductive material such as copper, aluminum, or nickel. A specific shape of the busbar 3 is not limited to that shown in FIG. 1 and may be changed in design to have any of various shapes that may electrically connect neighboring secondary batteries 2.

The plurality of busbars 3 may be supported inside the housing 10 by a busbar holder H (such as shown in FIG. 1).

The busbar holder H according to the present embodiments may be formed to have a flat plate shape. The busbar holder H may be disposed between the cover 12 and the secondary battery 2. The busbar 3 may be fixed to the busbar holder H by any of various types of coupling methods such as fitting coupling, bolting, and injection coupling methods. The busbar holder H may include an electrically insulating polymer compound material.

According to the present disclosure, it is possible to prevent the degradation in secondary battery due to radiated heat concentration on a local region by reducing electrical resistance through the extension of a current transmission path between an electrode assembly and a terminal.

According to the present disclosure, it is possible to secure a space in which various electronic parts can be mounted on a cap plate by relatively increasing a distance between a positive electrode terminal and a negative electrode terminal.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A secondary battery comprising:
a case;
an electrode assembly disposed inside the case and having a first electrode and a second electrode;
a first tab member connected to the first electrode and extending from the electrode assembly in a first direction;
a cap assembly disposed to face the electrode assembly and having a first terminal and a second terminal; and
a first connection member disposed between the electrode assembly and the cap assembly and connected to the first terminal and the first tab member,
wherein the first connection member is formed asymmetrically with a first terminal axis passing through the first terminal in the first direction.

2. The secondary battery as claimed in claim 1, wherein the first connection member comprises:
a first current collector connected to the first terminal;
a first inner plate extending from the first current collector in a second direction intersecting the first direction; and
a first outer plate extending from the first current collector in a direction opposite to the second direction, wherein:
a length of the first inner plate in the second direction differs from a length of the first outer plate in the second direction.

3. The secondary battery as claimed in claim 2, wherein the length of the first inner plate is greater than the length of the first outer plate.

4. The secondary battery as claimed in claim 2 or 3, wherein a ratio of the length of the first outer plate to the length of the first inner plate is 0.25 or more and less than 1.

5. The secondary battery as claimed in claim 2, 3 or 4, wherein the first tab member comprises:
a first inner tab member connected to the first inner plate; and
a first outer tab member spaced apart from the first inner tab member in the direction opposite to the second direction and connected to the first outer plate.

6. The secondary battery as claimed in claim 5, wherein a length of the first inner tab member in the second direction is greater than a length of the first outer tab member in the second direction.

7. The secondary battery as claimed in claim 5 or 6, further comprising:
a plurality of first inner welding lines extending from the first inner plate toward the first inner tab member and arranged in the second direction; and
a plurality of first outer welding lines extending from the first outer plate toward the first outer tab member and arranged in the second direction.

8. The secondary battery as claimed in claim 7, wherein the first inner tab member comprises a plurality of first inner tabs stacked in a third direction intersecting the first direction and the second direction, and
the first inner welding line is disposed parallel to the third direction.

9. The secondary battery as claimed in any preceding claim, further comprising:
a second tab member connected to the second electrode and spaced apart from the first tab member; and
a second connection member disposed between the electrode assembly and the cap assembly and connected to the second terminal and the second tab member.

10. The secondary battery as claimed in claim 9, wherein the second tab member extends from the electrode assembly in the first direction, and
the second connection member is formed asymmetrically with a second terminal axis passing through the second terminal in the first direction.

11. The secondary battery as claimed in claim 10, wherein the second connection member comprises:
a second current collector connected to the second terminal;
a second inner plate extending from the second current collector in a direction opposite to a second direction intersecting the first direction; and
a second outer plate extending from the second current collector in the second direction, and
a length of the second inner plate in the second direction differs from a length of the second outer plate in the second direction.

12. The secondary battery as claimed in claim 11, wherein the second tab member comprises:
a second inner tab member connected to the second inner plate; and
a second outer tab member spaced apart from the second inner tab member in the second direction and connected to the second outer plate.

13. The secondary battery as claimed in any preceding claim, wherein the first terminal and the second terminal are spaced apart from each other in a second direction intersecting the first direction.

14. A battery pack comprising:
a housing; and
a plurality of secondary batteries disposed inside the housing,
wherein each secondary battery is as claimed in any preceding claim..

15. The battery pack as claimed in claim 14 when dependent on claim 9, wherein the second connection member is formed asymmetrically with a second terminal axis passing through the second terminal in the first direction.
